# EUROPÄISCHE PATENTSCHRIFT

(11) **EP 1 665 922 B1**
(45) Veröffentlichungstag und Bekanntmachung des Hinweises auf die Patenterteilung: **23.01.2008**
(21) Anmeldenummer: 05025611.4
(22) Anmeldetag: 24.11.2005
(51) Int. Cl.: A01D 78/10

(54) **Heuwerbungsmaschine**
Haymaking machine
Machine de fenaison

(30) Priorität: 03.12.2004 DE 102004058461
(43) Veröffentlichungstag der Anmeldung: 07.06.2006
(73) Patentinhaber: Maschinenfabrik Bernard Krone GmbH, 48480 Spelle (DE)
(72) Erfinder: Krone, Bernard, Dr.-Ing. E. h., 48480 Spelle (DE); Afting, Andreas, Dipl.-Ing., 48488 Emsbüren (DE); Hermes, Klaus, 48493 Wettringen (DE)

(56) Entgegenhaltungen:
- EP-A- 0 937 382
- EP-A- 1 433 372
- WO-A-00/62595
- DE-A1- 4 340 384
- DE-C1- 19 716 379
- DE-C2- 19 952 555
- DE-U1- 20 311 102
- DE-U1- 29 818 457
- NL-C2- 1 022 564

## Beschreibung

Die Erfindung bezieht sich auf eine Heuwerbungsmaschine, insbesondere zum Schwaden von landwirtschaftlichem Halm- und Blattgut, wie beispielsweise Heu, Stroh oder angewelktem Grüngut gemäß dem Oberbegriff des Anspruches 1.
Um bei dem ständig wachsendem Wettbewerbsdruck auch weiterhin einen wirtschaftlichen Einsatz derartiger Heuwerbungsmaschinen sowie der diesen nachfolgenden Maschinen und Geräten, wie Häckslem oder dgl. zu gewährleisten, besteht eine ständige Forderung nach immer leistungsfähigeren Maschinen mit immer größeren Arbeitsbreiten. Derart große Arbeitsbreiten wie sie bereits erreicht sind und insbesondere noch weitere Vergrößerungen, sind jedoch zunehmend nur durch technisch sehr aufwändige und damit kostenintensive Lösungen zu verwirklichen. Eine besondere konstruktive Herausforderung stellt dabei die möglichst schnelle und bedienerfreundliche Umstellung der Maschine von einer Arbeits- und Betriebsstellung in eine Transportstellung und umgekehrt dar, die den gesetzlichen und verkehrsrechtlichen Bestimmungen insbesondere bezüglich maximaler Transporthöhe und -breite entspricht.

Bei einer, aus einer eigenen älteren DE 197 16 379 C1 bekannten Heuwerbungsmaschine sind die zwei vorderen, äußeren der insgesamt vier Kreiselrechen über längenveränderliche Trag- und Antriebsanordnungen um in Fahrt- und Arbeitsrichtung gerichtete Achsen schwenkbar an einem über Laufräder gegenüber dem Erdboden abgestützten Tragrahmen schwenkbar gelagert. Die Trag- und Antriebsanordnungen der vorderen Kreiselrechen sind in der Form eines Winkelhebels gestaltet und am Tragrahmen in Erdbodennähe so angelenkt, dass zum einen durch die durch eine Schwenkbewegung erreichbare Überführung der vorderen Kreiselrechen aus der nahezu vertikalen Transportstellung in eine bodenparallele Arbeits- und Betriebsstellung und eine zeitlich überlagerte oder nachgeschaltete Verlängerung der Trag- und Antriebanordnungen bereits eine große Arbeitsbreite zur Verfügung steht. Aufgrund der minimalen Längen der Trag- und Antriebsanordnungen bzw. der Durchmesser der Kreiselrechen in der Transportstellung wird eine für den Straßentransport zulässige maximale Höhe (Grenzwert) erreicht. Gewisse Nachteile bestehen bei diesen bekannten Ausführungsformen von Schwadern jedoch darin, dass sie unter anderem durch die begrenzten Längenverschiebungen innerhalb der Gelenkwellen zum Antrieb der Kreiselrechen in ihrer Ausführungsform an Grenzen bezüglich einer weiteren Vergrößerung der Arbeitsbreite bei gleichzeitiger Einhaltung der maximal zulässigen Transporthöhe stoßen.

In der ebenfalls eigenen DE 199 52 555 C2 wird eine Heuwerbungsmaschine beschrieben, welche bezüglich Arbeitsbreite und Leistungsfähigkeit durch ihre besonders erfinderischen neuen Merkmale eine wesentliche Verbesserung zum Stand der Technik darstellt. Bei dieser Maschine sind die Trag- und Antriebsanordnungen der vorderen Kreiselrechen jeweils an mit dem Tragrahmen verbundenen Schlitten-Schiebeführungen gehaltert, welche quer zur Fahrt- und Arbeitsrichtung und dabei insbesondere in horizontaler Richtung ausschiebbar ausgebildet sind. Durch diese zusätzlichen Schlittenführungen wird es ermöglicht, zusätzlich zu bereits aus dem Stand der Technik bekannten Maßnahmen, eine weitere Vergrößerung der Breite des von den vorderen Kreiselrechen der Heuwerbungsmaschine vorgegebenen maximal bearbeitbaren Feldstreifens zu erreichen, ohne dass dadurch eine größere und für den Straßentransport nicht mehr zulässige Transporthöhe herbeigeführt wird.

Die Vergrößerung der Arbeitsbreite nach der zuvor beschriebenen Erfindung ist nachteilig jedoch nur durch einen hohen konstruktiven und technischen Aufwand erreichbar, was gleichzeitig hohe Herstellungskosten und ein wesentlich erhöhtes unerwünschtes Maschinengewicht bedeutet.

Daraus stellt sich als Aufgabe der Erfindung, eine Heuwerbungsmaschine, insbesondere zum Schwaden von landwirtschaftlichem Halmgut mit zumindest einer dem Drei- bis Vierfachen der für den Straßentransport zulässigen maximalen Transportbreite entsprechenden Gesamtarbeitsbreite zu schaffen, bei der mittels einer konstruktiv einfachen, kostengünstigen und bedienerfreundlichen Trag- und Antriebsanordnung die Rechelemente aus einer nahezu bodenparallelen, die maximale Arbeitsbreite bestimmenden Arbeits- und Betriebsstellung in eine, die für den Straßentransport maximal zulässigen Transportabmessungen bezüglich Höhe und Breite nicht überschreitenden Transportstellung und zurück überführbar sind. Die mechanischen Antriebsverbindungen zu den Rechelementen sollen dabei so gestaltet sein, dass keinerlei manuelle Umstellungsarbeiten an den Antriebselementen notwendig sind und Blockierungen des Antriebes der Rechelemente in der Transportstellung ausgeschlossen sind.

Zur Lösung der gestellten Aufgabe zeichnet sich die Heuwerbungsmaschine der vorstehend genannten Art durch die im Anspruch 1 genannten Merkmale aus. Hinsichtlich der weiteren Ausgestaltung der Erfindung wird auf die Ansprüche 2 bis 30 verwiesen.
Die erfindungsgemäße Heuwerbungsmaschine weist vorzugsweise mindestens vier Kreiselrechen oder dergleichen Rechelemente auf, wobei die vorderen äußeren Kreiselrechen und die diesen nachgeordneten inneren Kreiselrechen eine V-förmige Anordnung zueinander einnehmen, so dass eine durchgehende maximale, zumindest dem Drei- bis Vierfachen der maximal zulässigen Transportbreite entsprechenden Gesamtarbeitsbreite erreichbar ist. Vorzugsweise wird sogar von einer Gesamtarbeitsbreite ausgegangen, die oberhalb von 12 m liegt. Zur Bereitstellung derart großer Arbeitsbreiten sind die äußeren Kreiselrechen, welche die Arbeitsbreite der Maschine bestimmen, vorzugsweise an längenveränderlichen Trag- und Antriebsanordnungen angebracht, welche um in Fahrt- und Arbeitsrichtung gerichtete Schwenkachsen beidseitig an einem Tragrahmen der Heuwerbungsmaschine schwenkbar gelagert sind. Durch einen kleinen Kunstgriff bezüglich der Ausführung und der Anlenkung der Trag- und Antriebsanordnungen wird erreicht, dass durch eine einfache Schwenkbewegung der Trag- und Antriebsanordnungen die äußeren, meistens gleichzeitig auch vorderen Kreiselrechen aus einer Betriebstellung maximaler Arbeitsbreite in eine Transportstellung mit minimalen Abmessungen verbracht werden. Die Trag- und Antriebsanordnungen sind dabei so am Tragrahmen angelenkt, dass dem Tragrahmen zugewandte Enden der Trag- und Antriebsanordnungen in der Arbeits- und Betriebsstellung einen großen Abstand zu einer vertikalen Längsmittelebene des Tragrahmens und einen großen vertikalen Abstand zum Erdboden hin aufweisen, während die dem Tragrahmen zugewandten Enden der Trag- und Antriebsanordnungen nach einer Überführung aus der Arbeits- und Betriebsstellung in die Transportstellung einen möglichst geringen horizontalen Abstand zur vertikalen Längsmittelebene des Tragrahmens und einen möglichst kleinen vertikalen Abstand zum Erdboden hin einnehmen. In der bereits erwähnten eigenen DE 197 16 379 C1 wird diese erfinderische Ausführung der Trag- und Antriebsanordnungen ausführlich beschrieben, weshalb hier nicht weiter auf die Einzelheiten eingegangen wird.

Eine vorteilhafte Ausbildung der o. g. Erfindung sieht vor, dass die Trag- und Antriebsanordnungen der vorderen äußeren Kreiselrechen die Form eines Winkelhebels aufweisen, wobei die kurzen Schenkel an Tragrahmen um in Fahrt- und Arbeitsrichtung gerichtete Schwenkachsen gelagert sind. Um ihre Länge verändern zu können, sind die langen Schenkel der als Winkelhebel ausgeführten Trag- und Antriebsanordnungen teleskopisch ein- und ausfahrbar ausgebildet, wozu vorzugsweise hydraulische Kolben- Zylindereinheiten verwendet werden können. Andere Antriebsanordnungen wie beispielsweise elektrische Stellmotoren sind allerdings ebenso denkbar.

Zur Schaffung eines einfachen Antriebskonzeptes, welches jederzeit ohne manuelle Umstell- oder Umbauarbeiten einen störungsfreien mechanischen Antrieb der Kreisel auch bei deren extremen Positionsverlagerungen sicherstellt, wurden bisher bei Heuwerbungsmaschinen der vorgenannten Art in bevorzugter Ausführungsform an den dem Tragrahmen zugewandten Enden der Trag- und Antriebsanordnungen als Winkelgetriebe ausgebildete Eingangsgetriebe angeordnet, welche vorzugsweise über Gelenkwellen oder dergl. Antriebselemente mit einem auf dem Tragrahmen angeordneten zentralen Verteilergetriebe verbunden sind. An bzw. innerhalb der Trag- und Antriebsanordnungen überträgt eine weitere Gelenkwelle die Drehbewegung vom Eingangsgetriebe zum Kreiselgetriebe und damit auf den Kreisel. Beide Antriebswellen eines Kreisel-Antriebsstranges müssen dabei längenveränderlich ausgeführt sein, um die Lageveränderungen der Kreisel zu ermöglichen. Insbesondere die teleskopisch ein- und ausfahrbare Antriebswelle zwischen dem Eingangsgetriebe am inneren Ende der Trag- und Antriebsanordnung und dem Kreiselgetriebe ist dabei allerdings nachteilig das begrenzende Element für eine weitere Verschiebung des Kreisels zur Erreichung einer noch größeren Arbeitsbreite. Die maximale Verschiebbarkeit einer teleskopierbaren Antriebswelle ist durch ein minimales Überdeckungsmaß der beiden zueinander verschiebbaren Gelenkwellenteile begrenzt.

Bei der Heuwerbungsmaschine nach der neuen Erfindung wurde jedoch ein Verlagerungsweg der Kreisel erreicht, der über das Maß der Teleskopierbarkeit der Antriebswellen weit hinaus geht. Ermöglicht wurde diese Arbeitsbreitenvergrößerung durch den erstmaligen Einsatz eines Antriebsstranges, der durch seine erfinderischen Merkmale wesentlich größere Lageveränderungen seiner Endpunkte zueinander ermöglicht, als es bisher nach dem Stand der Technik möglich war.

Da der Antriebsstrang der Heuwerbungsmaschine nach der Erfindung nicht innerhalb der Trag- und Antriebsanordnung liegt und auch nicht zwangsläufig mit dieser verbunden ist, wird im folgenden nicht mehr von einer Trag- und Antriebsanordnung als eine Baueinheit, sondern von Traganordnungen und Antriebsanordnungen als separate Baugruppen gesprochen. Durch die Trennung der Baugruppen ergeben sich bezüglich der Ausführungsformen sowohl der Traganordnung als auch der Antriebsanordnung diverse erweiterte Möglichkeiten und Kombinationen. So ist beispielsweise auch eine Traganordnung denkbar, bei der die Längenänderung durch Verschwenkung ihrer Einzelabschnitte zueinander um Schwenkachsen und nicht durch Verschiebbarkeit zueinander erreicht wird. Die Antriebsanordnung eines Kreiselrechens einer erfindungsgemäßen Heuwerbungsmaschine besteht zumindest aus einem zweiteiligen Antriebsstrang, wobei ein erstes vorzugsweise längenveränderliches Antriebselement ortsfest entweder direkt von einer Antriebsquelle oder von einem Getriebe, welches auch ein Verteilgetriebe sein kann, eine Drehbewegung aufnimmt. Ein zweites vorzugsweise ebenfalls längenveränderliches Antriebselement überträgt die Drehbewegung weiter zum Kreisel, welcher dadurch in Drehung versetzt wird.

Ein besonderes erfinderisches Merkmal dieses Antriebsstranges ist die Lageveränderbarkeit der die beiden Antriebselemente verbindenden Stützanordnung, wobei die beiden Antriebselemente in Form von Antriebswellen oder Gelenkwellen durch die Stützanordnung winkelveränderbar zueinander gelagert sind. Die Stützanordnung kann erfindungsgemäß als Winkelgetriebe, Schwenkgetriebe, Doppelkreuzgelenk oder als ein entsprechendes Antriebselement ausgeführt sein, welches Drehbewegung übertragend zwei Antriebswellen winkelveränderbar zueinander abstützt und dabei selbst lageveränderbar gehaltert ist.

Durch die erfinderische Verwendung einer lageveränderbaren Stützanordnung im Antriebsstrang des Kreiselrechens, ist eine Positionsveränderung des Kreiselrechens im Abstand zum Tragrahmen möglich, die nicht durch die maximale Längenveränderung (Teleskopierbarkeit) der Antriebswellen begrenzt ist. Wenn bei der erfindungsgemäßen Heuwerbungsmaschine ein die maximale Arbeitsbreite bestimmender Rechkreisel in seine äußerste Arbeitsposition bewegt wird und zumindest eine längenveränderbare Antriebswelle der Antriebswellen seines Antriebsstranges ihre maximale Länge erreicht hat, wird durch eine Positionsverlagerung der Stützanordnung des Antriebsstranges die weitere Bewegung des Kreisels ermöglicht. Die Bewegung der Stützanordnung kann dabei auf vielfältige Art und Weise erfolgen.

Eine mechanische Verbindung der Stützanordnung mit dem Kreisel bzw. mit dem äußeren, den Kreisel haltenden Ende der Traganordnung könnte beispielsweise gleichzeitig mit der Kreiselverfahrbewegung die Stützanordnung bewegen, wobei die Bewegung der Stützanordnung entweder durch eine Untersetzungseinrichtung proportional zum Kreisel aber insgesamt mit einem geringeren Verfahrweg abläuft, oder aber durch einen Freigang in der mechanischen Verbindung nur über einen Teilverfahrweg des Kreisels im Gleichlauf mit dem Kreisel erfolgt. Ebenso ist aber auch denkbar, dass die Stützanordnung durch eine hydraulische oder elektrische Stelleinrichtung ihre Position während der Positionsverlagerung des Kreisels im Abstand zum Tragrahmen von einer Position geringen Abstandes in eine Position des größtmöglichen Abstandes ebenfalls verändert. Der Auslöser für eine Bewegung der Stützanordnung kann bei derartigen Ausführungen durch Positionssensoren, programmgesteuert oder aber auch durch hydraulische Kopplung mit dem Kreiselantrieb erfolgen.

Erfindungsgemäß ist die Stützanordnung mittels Halte- und Führungsmittel derart entweder mit dem Tragrahmen der Heuwerbungsmaschine oder mit der Traganordnung der Kreiselrechen verbunden, dass sie bei ihrer Positionsverlagerung entweder eine geradlinige Bewegung oder aber eine Bewegung auf einer Bahn um einen Drehpunkt ausführt. Die Hauptbewegungsrichtung der Stützanordnung entspricht dabei vorzugsweise der Bewegungsrichtung des Kreiselrechens. Somit ist erfindungsgemäß eine Heuwerbungsmaschine geschaffen, die durch eine sehr einfache und kostengünstige Antriebslösung bei minimalen Transportabmessungen im Rahmen der gesetzlichen Vorschriften eine maximale Arbeitsbreite von über 12 Metern bei optimalem Bedienkomfort bietet, die bisher nur mit sehr großem technischen Aufwand und mit hohen Kosten erreichbar war.

Eine detaillierte Beschreibung des Gegenstandes der Erfindung erfolgt nun anhand eines Ausführungsbeispieles. In der Zeichnung stellt im einzelnen dar:
**Fig. 1** eine Draufsicht einer erfindungsgemäßen Heuwerbungsmaschine in einer Arbeits- und Betriebsstellung;
**Fig. 2** eine Schnittdarstellung der Heuwerbungsmaschine von hinten auf die vorderen Kreiselrechen, wobei ein Kreiselrechen sich in der Transportstellung und ein Kreiselrechen sich in einer Arbeits- und Betriebsstellung befindet;
**Fig. 3** eine vergrößerte perspektivische Darstellung eines Bereiches der Heuwerbungsmaschine gemäß Fig. 1;
**Fig. 4** eine Darstellung wie Fig. 3, wobei sich der Kreiselrechen jedoch in einer weiteren Arbeits- und Betriebsstellung befindet.

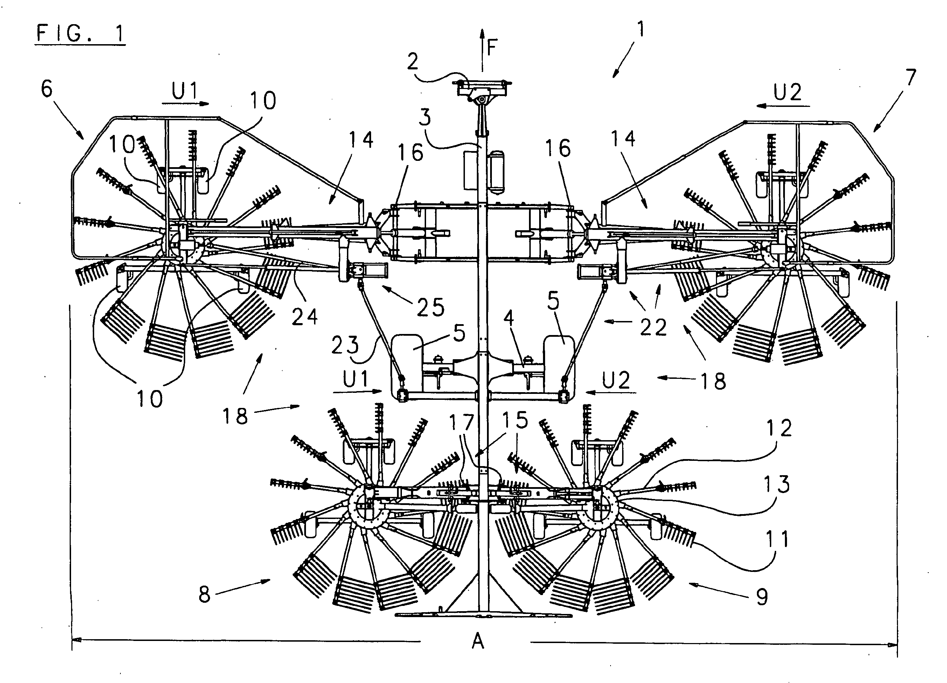

Aus der Fig. 1 der Zeichnung ist der Grundaufbau einer erfindungsgemäßen Heuwerbungsmaschine 1 ersichtlich. Eine derartige Heuwerbungsmaschine 1 wird über einen Anbaubock 2 an ein landwirtschaftliches Zugfahrzeug angekuppelt. An den Anbaubock 2 schließt sich ein Tragrahmen 3 an, der um eine vertikale Achse schwenkbar mit dem Anbaubock 2 verbunden ist. Etwa im mittleren Bereich des Tragrahmens 3 ist ein fest mit dem Tragrahmen 3 verbundener Fahrwerksträger 4 angebracht, der mit Laufrädern 5 bestückt ist. Des weiteren umfasst die Heuwerbungsmaschine 1 vordere Kreiselrechen 6, 7 und hintere Kreiselrechen 8, 9, die dem Tragrahmen 3 in ihren Arbeits- und Betriebsstellungen in einer V-förmigen Anordnung zugeordnet sind und sich selbsttätig der Fahrt- und Arbeitsrichtung F der Heuwerbungsmaschine anpassenden Stützrädern 10 gegenüber dem Erdboden abstützen. Die Kreiselrechen 6, 7, 8, 9 weisen mit Zinken 11 bestückte Zinkenarme 12 auf, die innerhalb eines Kreiselgehäuses 13 gelagert sind und von einer nicht näher dargestellten Steuerkurve innerhalb des Kreiselgehäuses 13 steuerbar sind. Grundsätzlich können alle Kreiselrechen 6, 7, 8, 9 so ausgeführt sein, dass die von den äußeren Zinken 11 der Zinkenarme 12 beschriebenen Durchmesser gleich groß ausgebildet sind. Beim dargestellten Ausführungsbeispiel weisen die hinteren inneren Kreiselrechen 8, 9 jedoch einen kleineren Durchmesser auf als die vorderen äußeren Kreiselrechen 6, 7. Dadurch, dass die hinteren inneren Kreiselrechen 8, 9 aber mit der gleichen Anzahl Zinkenarme 12 ausgerüstet sind und mit maximal den gleichen Antriebsdrehzahlen betrieben werden wie die vorderen äußeren Kreiselrechen 6, 7 wird eine bessere Recharbeit der hinteren inneren Kreiselrechen 8, 9 und somit eine gute Anpassung der Heuwerbungsmaschine 1 an die zur Mitte hin zunehmende Halmgutmenge erreicht. Mit einer Heuwerbungsmaschine 1 gemäß dem dargestellten Ausführungsbeispiel kann eine durchgehende Fläche mit einer Gesamtarbeitsbreite A bearbeitet werden, wobei die Gesamtarbeitsbreite A zumindest dem Drei- bis Vierfachen einer maximal für den Straßenverkehr Transportbreite entspricht und im dargestellten Ausführungsbeispiel oberhalb von 12 m liegt. Die Drehrichtung der Kreiselrechen 6, 7, 8, 9 entspricht dabei den jeweiligen Drehrichtungspfeilen U 1 und U2, so dass mittig hinter den hinteren inneren Kreiselrechen 8, 9 ein Schwad abgelegt werden kann, das für nachfolgende Erntemaschinen wie beispielsweise Feldhäcksler oder dergleichen die richtige Größe aufweist. Die Kreiselrechen 6, 7, 8, 9 sind jeweils über Traganordnungen 14, 15 um Schwenkachsen 16, 17 schwenkbeweglich mit dem Tragrahmen 3 verbunden.

Soweit entspricht die erfindungsgemäße Heuwerbungsmaschine 1 in etwa bekannten Heuwerbungsmaschinen wie beispielsweise in der DE 197 16 379 C1 bereits offenbart. Auf die genaue, auch im Folgenden nicht näher dargestellte bekannte Ausführung der Traganordnungen 15 der hinteren Kreiselrechen 8, 9 und deren Antrieb wird aus diesem Grunde nicht näher eingegangen.

Die Antriebsanordnungen 18 der vorderen Kreiselrechen 6, 7 hingegen sind in Fig. 1 deutlich dargestellt. Ausgehend von einem unter dem Tragrahmen 3 angebrachten Verteilergetriebe 19 führen die Antriebsanordnungen 18 spiegelbildlich weiter zu den vorderen Rechkreiseln 6, 7. Eine in einem beidseitig des Verteilergetriebes 19 beginnenden Getriebeausleger 20 liegende Antriebswelle führt jeweils zu einem endseitig an diesem angeordneten Winkelgetriebe 21. Von hier aus überträgt ein zweiteiliger Antriebsstrang 22, welcher aus zwei längenveränderbaren Teilantriebssträngen 23, 24 in Form von Gelenkwellen besteht und durch eine Stützanordnung 25 zwischen den Teilantriebssträngen 23, 24 abgestützt wird, die Drehbewegung auf die Kreiselrechen 6, 7. Die Stützanordnung 25 besteht im dargestellten Ausführungsbeispiel aus einem mit Halte- und Führungselementen 26 versehenen Winkelgetriebe 27, worauf später noch weiter eingegangen wird.

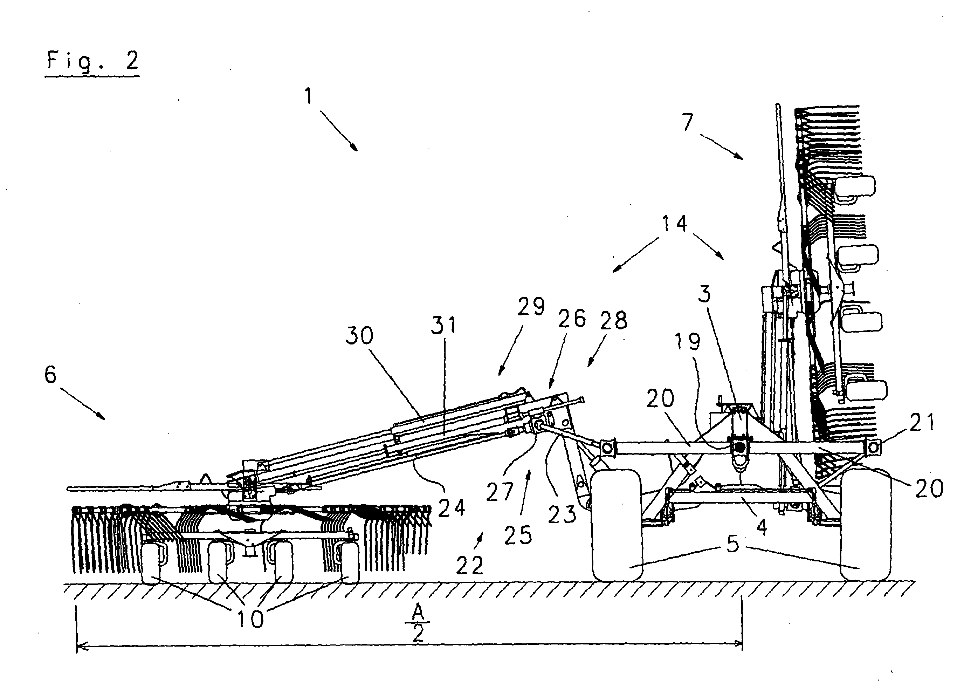

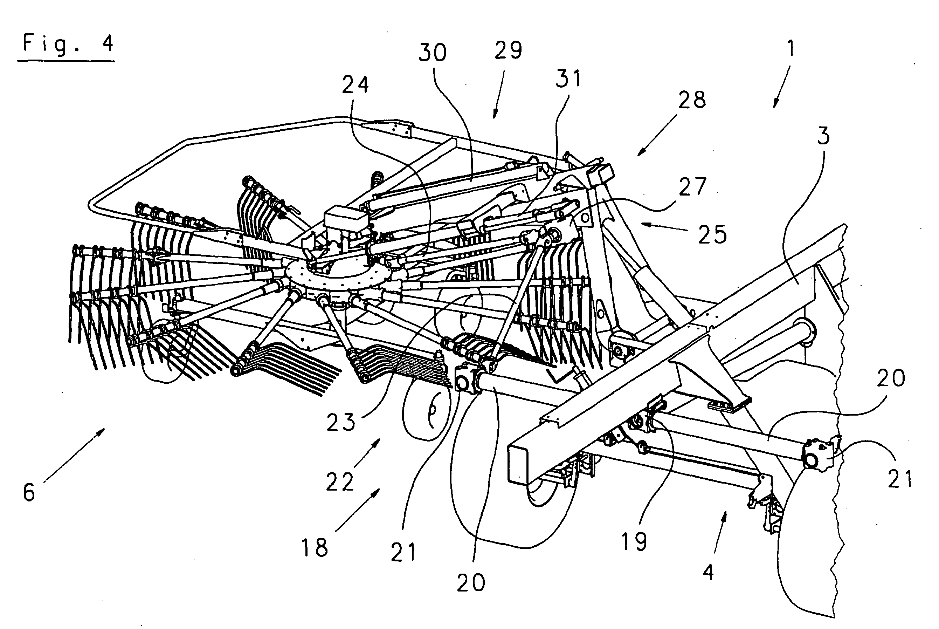

Die in Fig. 2 gezeigte hinter dem Fahrwerksträger 4 geschnittene Darstellung der Heuwerbungsmaschine 1 von hinten auf die vorderen Kreiselrechen 6, 7 macht insbesondere den großen Unterschied der Abmessungen zwischen Arbeitsstellung und Transportstellung deutlich. Der linke Kreiselrechen 6 ist in seiner Arbeits- und Betriebsstellung mit maximaler Arbeitsbreite dargestellt. Die Traganordnung 14 des Kreiselrechens 6 ist um die Schwenkachse 16 nach außen geschwenkt. Der rechte vordere Kreiselrechen 7 ist in Fig. 2 in seiner möglichst geringe Außenabmessungen aufweisenden Transportstellung dargestellt. Deutlich ist zu erkennen, wie sich die geschickte Ausbildung der inneren mit dem Tragrahmen 3 über die Schwenkachsen 16 verbunden Abschnitte der Traganordnungen 14 als Winkelhebel 28 günstig auf die Abmessungen auswirkt. Die weitere Verlagerung der Kreiselrechen 6, 7 in Richtung maximaler Arbeitsbreite A wird im Ausführungsbeispiel durch die teleskopierbare Ausbildung der langen Schenkel 29 der Winkelhebel 28 erreicht. Durch hydraulische Kolben-Zylindereinheiten 30 angetrieben, ermöglicht diese Teleskopierbarkeit eine stufenlose Verlagerung der Kreiselrechen 6,7 in ihrem Abstand zum Tragrahmen 3 von einer Arbeits- und Betriebstellung minimaler Arbeitsbreite wie in Fig. 4 dargestellt bis zu einer Arbeits- und Betriebsstellung maximaler Arbeitsbreite A, wie in den Fig. 1, 2 und 3 dargestellt. Da die Teleskopierbarkeit der Traganordnungen 14 gleichzeitig dazu genutzt wird, in der Transportstellung eine möglichst geringe, die gesetzlich vorgeschriebene Maximalhöhe von 4 m unterschreitende Maschinenhöhe zu erzielen, wird ein möglichst großer Verstellbereich der Traganordnungen 14 angestrebt. Der im Ausführungsbeispiel durch die Teleskopierbarkeit der Traganordnungen 14 erreichte Verstellbereich der Kreiselrechen 6, 7 zum Tragrahmen 3 kann in anderen Ausführungsformen auch beispielsweise durch Schwenken oder Klappen der Traganordnungen 14 um weitere Achsen erreicht werden.

Ebenso ist der Antrieb für die Verstellung in verschiedensten Ausführungen, beispielsweise durch elektrische Stellantriebe denkbar.

Bisher waren der gewünschten Verstellbarkeit der Traganordnungen 14 der Kreiselrechen 6, 7 jedoch Grenzen durch ihre Antriebsanordnung 18 gesetzt. Bei gattungsgemäßen Heuwerbungsmaschinen in bisher bekannten Ausführungsformen setzte das Maß der maximalen Längenänderung der Antriebswelle für den Kreiselantrieb an der Traganordnung gleichzeitig das Maß der maximalen Kreiselverlagerung im Abstand zum Tragrahmen 3 fest. Durch die besonders vorteilhafte Ausführung der Antriebsanordnungen 18 der erfindungsgemäßen Heuwerbungsmaschine 1 ist diese Begrenzung durch die maximale Längenveränderbarkeit der Teilantriebsstränge 24 aufgehoben und somit eine noch größere Gesamtarbeitsbreite A bei gleichzeitig einzuhaltenden Transportabmessungen im Rahmen der gesetzlichen Bestimmungen ermöglicht.

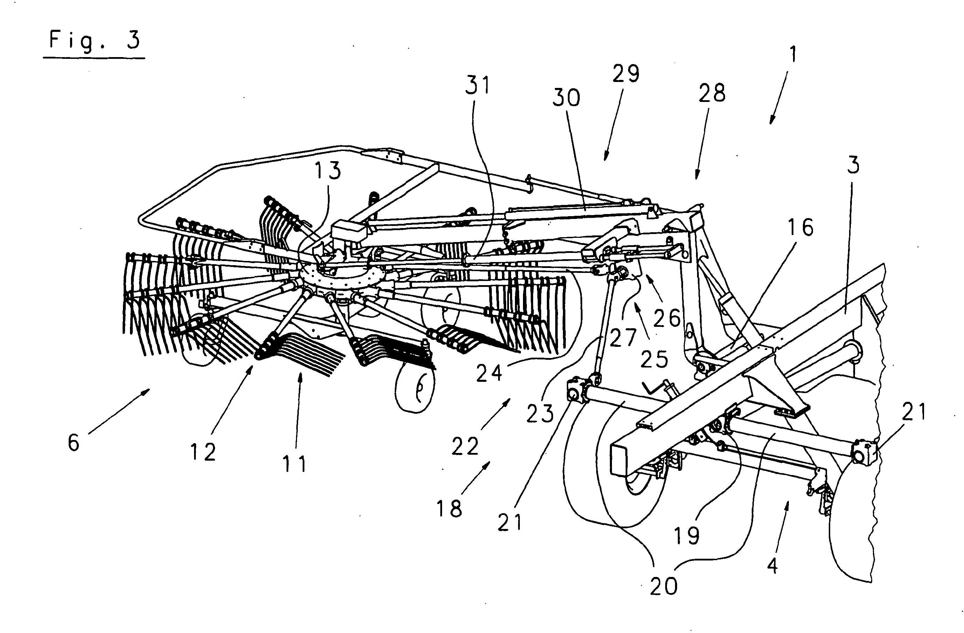

Die Fig. 3 und 4 zeigen in einer perspektivische Teilansicht der Heuwerbungsmaschine 1 nach der Erfindung den in Fahrtrichtung F gesehen linken vorderen Kreiselrechen 6 in jeweils einer Arbeits- und Betriebsstellung. In Fig. 3 ist der Kreiselrechen 6 in der äußeren Endlagenposition seiner Arbeits- und Betriebsstellung, welche gleichzeitig die maximale Arbeitsbreite A beschreibt, dargestellt. Der längenveränderliche lange Schenkel 29 des Winkelhebels 28 der Traganordnung 14 ist durch die Kolben- Zylindereinheit 30 auf seine maximale Länge ausgefahren. Die längenveränderliche Gelenkwelle des Teilantriebsstrangs 24 ist ebenfalls auf ihre maximale Länge ausgezogen. Das Winkelgetriebe 27 der Stützanordnung 25 des Antriebsstranges 22 des Kreiselrechens 6 ist als Besonderheit der erfindungsgemäßen Heuwerbungsmaschine 1 lageveränderbar über Halte- und Führungselemente 26 am Winkelhebel 28 der Traganordnung 14 gelagert. Durch die Positionsverlagerung der Stützanordnung 25 und damit des Winkelgetriebes 27 des Antriebsstranges 22 als besonderes neues Merkmal der Heuwerbungsmaschine 1 nach der Erfindung wird eine Positionsverlagerung des Kreiselrechens 6 im Abstand zum Tragrahmen 3 über das Maß der Längenveränderbarkeit des Teilantriebstranges 24 hinaus ermöglicht. Wie aus Fig. 3 ersichtlich, befindet sich die Stützanordnung 25 in einer äußeren Endlagenposition, wenn sich der Kreiselrechen 6 ebenfalls in seiner äußeren Endlagenposition befindet.

Fig. 4 zeigt den Kreiselrechen 6 in seiner inneren Endlagenposition der Arbeits- und Betriebsstellung, wobei sich die Stützanordnung 25 des Antriebsstranges 22 ebenfalls in einer inneren Endlagenposition in Richtung Tragrahmen 3 befindet. Somit ist es bei der erfindungsgemäßen Heuwerbungsmaschine 1 möglich, die Kreiselrechen 6, 7 in ihrem Abstand zum Tragrahmen 3 um ein Maß zu verlagern, welches der Summe der maximalen Längenveränderung des Teilantriebsstranges 24 und der Positionsverlagerung der Stützanordnung 25 entspricht. Im dargestellten Ausführungsbeispiel ist die Stützanordnung 25 über ein teleskopierbares Mitnehmerelement 31 derart mit dem Kreiselrechen 6, 7 bzw. mit Befestigungselementen des Kreiselrechens 6, 7 verbunden, dass bei der Verlagerung des Kreiselrechens 6, 7 in Richtung seiner Endlagenposition der maximalen Arbeitsbreite A ab der Position, wo der Teilantriebsstrang 24 seine maximale Länge erreicht hat, das Mitnehmerelement 31 auf Anschlag geht und damit bei der weiteren Verlagerung des Kreiselrechens 6, 7 nach außen gleichzeitig synchron die Stützanordnung 25 ebenfalls in Richtung nach außen verlagernd mitzieht. In entgegengesetzter Richtung hat das Mitnehmerelement 31 ebenfalls soviel Freigang wie die Gelenkwelle des Teilantriebsstranges 24 längenveränderlich ist. Kurz vor Erreichen der minimalen Länge des Teilantriebsstranges 24 erreicht das Mitnehmerelement 31 seine minimale Länge und schiebt ab diesem Punkt bei weiterer Verlagerung des Kreiselrechens 6, 7 in Richtung des Tragrahmens 3 ebenfalls synchron mit dem Kreiselrechen 6, 7 die Stützanordnung 25 in Richtung ihrer inneren Endlage.
Diese Art der Bewegung der Stützanordnung 25 an der Heuwerbungsmaschine 1 nach der Erfindung ist nur ein Ausführungsbeispiel von diversen weiteren Möglichkeiten.
So sind auch mechanische Verbindungselemente zwischen den Kreiselrechen 6, 7 und der Stützanordnung 25 denkbar, die durch eine untersetzende Hebelanordnung die Stützanordnung 25 proportional zur Bewegung des Kreiselrechens 6, 7 gleichzeitig bewegen.

In weiteren Ausführungsformen sind auch elektrische oder hydraulische Stellantriebe für die Positionsverlagerung der Stützanordnung 25 denkbar, wobei die Ansteuerung beispielsweise durch Positionssensoren erfolgen könnte. Auch die Halte- und Führungselemente 26 der Stützanordnung 25 sind in weiteren Ausführungsformen, beispielsweise als Schwenkführung um einen Drehpunkt denkbar.

## Patentansprüche

1. Heuwerbungsmaschine (1), insbesondere zum Schwaden von landwirtschaftlichem Halm- und Blattgut, mit mindestens zwei, um vertikale Achsen umlaufend angetriebenen, sich über Stützräder (10) gegenüber dem Erdboden abstützenden und mit Zinken (11) bestückte Zinkenarme (12) aufweisenden Kreiselrechen (6, 7, 8, 9) oder dergl. Rechelemente, von denen mindestens die die maximale Arbeitsbreite bestimmenden Kreiselrechen (6, 7) über an einem Tragrahmen (3) schwenkbar gehalterte längenveränderliche Traganordnungen (14) aus einer Endlagenposition, welche eine Arbeits- und Betriebsstellung darstellt, in eine weitere Endlagenposition und zurück überführbar und in ihrem Abstand zum Tragrahmen (3) relativ bewegbar sind, wobei die Antriebsanordnungen (18) der die maximale Arbeitsbreite bestimmenden und im Abstand zum Tragrahmen (3) relativ bewegbaren Kreiselrechen (6, 7) jeweils einen mehrteiligen Antriebsstrang (22) umfassen, dessen Teilantriebsstränge (23, 24) durch zumindest eine Drehbewegung übertragende Stützanordnung (25) zueinander winkelveränderbar verbunden sind, **dadurch gekennzeichnet, dass** die Stützanordnung (25) des Antriebsstranges (22) bei der Verlagerung des Kreiselrechens (6, 7) von einer Endlagenposition in eine zweite Endlagenposition und umgekehrt, ihre Position sowohl zum Tragrahmen (3) als auch zur Traganordnung (14) und zum Kreiselrechen (6, 7) verändert.

2. Heuwerbungsmaschine (1) nach Anspruch 1, **dadurch gekennzeichnet, dass** die Stützanordnung (25) des Antriebsstranges (22) zumindest ein Drehbewegung übertragendes Gelenk umfasst.

3. Heuwerbungsmaschine (1) nach Anspruch 1 oder 2, **dadurch gekennzeichnet, dass** die Stützanordnung (25) des Antriebsstranges (22) ein Getriebe (27) umfasst.

4. Heuwerbungsmaschine (1) nach einem oder mehreren der vorhergehenden Ansprüche, **dadurch gekennzeichnet, dass** die Stützanordnung (25) des Antriebsstranges (22) Halterungs- und Führungselemente (26) aufweist.

5. Heuwerbungsmaschine (1) nach Anspruch 4 **dadurch gekennzeichnet, dass** die Halterungs- und Führungselemente (26) der Stützanordnung (25) eine gleichzeitige Positionsverlagerung der Stützanordnung (25) sowohl zum Tragrahmen (3) als auch zur Traganordnung (14) und zum Kreiselrechen (6, 7) ermöglichen.

6. Heuwerbungsmaschine (1) nach einem oder mehreren der vorhergehenden Ansprüche, **dadurch gekennzeichnet, dass** die Stützanordnung (25) Halterungs- und Führungselemente (26) aufweist, welche die Stützanordnung (25) mit einer Traganordnung (14) positionsveränderlich verbindet.

7. Heuwerbungsmaschine (1) nach Anspruch 6, **dadurch gekennzeichnet, dass** die Stützanordnung (25) Halterungs- und Führungselemente (26) aufweist, welche die Stützanordnung (25) mit dem Tragarm (28) einer Traganordnung (14) positionsveränderlich verbindet.

8. Heuwerbungsmaschine (1) nach Anspruch 7, **dadurch gekennzeichnet, dass** die Stützanordnung (25) Halterungs- und Führungselemente (26) aufweist, welche die Stützanordnung (25) mit dem Tragarm (28) einer Traganordnung (14) im am Tragrahmen (3) gehalterten Endbereich des Tragarmes (28) positionsveränderlich verbindet.

9. Heuwerbungsmaschine (1) nach einem oder mehreren der Ansprüche 1 bis 5, **dadurch gekennzeichnet, dass** die Stützanordnung (25) Halterungs- und Führungselemente (26) aufweist, welche die Stützanordnung (25) mit dem Tragrahmen (3) der Heuwerbungsmaschine (1) positionsveränderlich verbindet.

10. Heuwerbungsmaschine (1) nach einem oder mehreren der vorhergehenden Ansprüche, **dadurch gekennzeichnet, dass** die Position der Stützanordnung (25) sowohl zum Tragrahmen (3) als auch zur Traganordnung (14) und zum Kreiselrechen (6, 7) eindeutig bestimmt ist, wenn sich der Kreiselrechen (6, 7) in einer Endlagenpositionen befindet.

11. Heuwerbungsmaschine (1) nach einem oder mehreren der vorhergehenden Ansprüche, **dadurch gekennzeichnet, dass** die Stützanordnung (25) während ihrer Positionsverände-rung auf einer linearen Bahn bewegt wird.

12. Heuwerbungsmaschine (1) nach einem oder mehreren der Ansprüche 1 bis 10, **dadurch gekennzeichnet, dass** die Stützanordnung (25) ihre Positionsveränderungen auf einer nicht linearen Bahn vollzieht.

13. Heuwerbungsmaschine (1) nach einem oder mehreren der vorhergehenden Ansprüche, **dadurch gekennzeichnet, dass** der mehrteilige Antriebsstrang (22) eines die maximale Arbeitsbreite (A) bestimmenden und im Abstand zum Tragrahmen relativ bewegbaren Kreiselrechens (6, 7) zumindest zwei längenveränderliche Teilantriebsstränge (23, 24) und zumindest eine Stützanordnung (25) aufweist, die diese Teilantriebsstränge (23, 24) zueinander winkelveränderbar verbindet.

14. Heuwerbungsmaschine (1) nach einem oder mehreren der vorhergehenden Ansprüche, **dadurch gekennzeichnet, dass** zumindest die Traganordnungen (14) der die maximale Arbeitsbreite bestimmenden Kreiselrechen (6, 7) einen Tragarm in Form eines Winkelhebels (28) aufweisen.

15. Heuwerbungsmaschine (1) nach Anspruch 14, **dadurch gekennzeichnet, dass** der Tragarm (28) der Traganordnung (14) einen längenveränderlichen langen Schenkel (29) aufweist.

16. Heuwerbungsmaschine (1) nach einem oder mehreren der vorhergehenden Ansprüche, **dadurch gekennzeichnet, dass** zumindest die Traganordnungen (14) der die maximale Arbeitsbreite bestimmenden Kreiselrechen (6, 7) jeweils einen teleskopisch ein- und ausfahrbaren Tragarm aufweisen.

17. Heuwerbungsmaschine (1) nach einem oder mehreren der Ansprüche 1-15, **dadurch gekennzeichnet, dass** zumindest die Traganordnungen (14) der die maximale Arbeitsbreite bestimmenden Kreiselrechen (6, 7) jeweils einen mehrteiligen, durch Schwenkachsen längenveränderbaren Tragarm aufweisen.

18. Heuwerbungsmaschine (1) nach einem oder mehreren der vorhergehenden Ansprüche, **dadurch gekennzeichnet, dass** die Bewegung der Stützanordnung (25) eines Antriebsstranges (22) abhängig von einer Positionsveränderung des dem Antriebsstrang (22) zugehörigen Kreiselrechens (6, 7) im Abstand relativ zum Tragrahmen (3) der Heuwerbungsmaschine (1) bewirkt wird.

19. Heuwerbungsmaschine (1) nach Anspruch 18, **dadurch gekennzeichnet, dass** die Bewegung der Stützanordnung (25) eines Antriebsstranges (22) zumindest in eine Bewegungsrichtung durch eine mechanische Verbindung mit dem dem Antriebsstrang (22) zugehörigen Kreiselrechen (6, 7) bewirkt wird.

20. Heuwerbungsmaschine (1) nach Anspruch 19, **dadurch gekennzeichnet, dass** die Stützanordnung (25) des Antriebsstranges (22) eines Kreiselrechens (6, 7) durch ein längenveränderbares Verbindungsglied mit dem dem Antriebsstrang (22) zugehörigen Kreiselrechen (6, 7) verbunden ist.

21. Heuwerbungsmaschine (1) nach Anspruch 19, **dadurch gekennzeichnet, dass** die Stützanordnung (25) des Antriebsstranges (22) eines Kreiselrechens (6, 7) durch ein nur Zugkräfte übertragendes Verbindungsglied mit dem dem Antriebsstrang (22) zugehörigen Kreiselrechen (6, 7) verbunden ist.

22. Heuwerbungsmaschine (1) nach Anspruch 18, **dadurch gekennzeichnet, dass** die Bewegung der Stützanordnung (25) eines Antriebsstranges (22) durch ein, durch die Positionsveränderung des dem Antriebsstrang (22) zugehörigen Kreiselrechens (6, 7) im Abstand relativ zum Tragrahmen (3) der Heuwerbungsmaschine (1) ausgelöstes Signal eingeleitet wird.

23. Heuwerbungsmaschine (1) nach einem oder mehreren der vorhergehenden Ansprüche, **dadurch gekennzeichnet, dass** die Bewegung der Stützanordnung (25) durch ein elektrisches oder hydraulisches Stellglied erfolgt.

24. Heuwerbungsmaschine (1) nach einem oder mehreren der vorhergehenden Ansprüche, **dadurch gekennzeichnet, dass** die Bewegung der Stützanordnung (25) eines Antriebsstranges (22) zumindest teilweise durch einen Kraftspeicher erfolgt.

25. Heuwerbungsmaschine (1) nach einem oder mehreren der vorhergehenden Ansprüche, **dadurch gekennzeichnet, dass** die Bewegung der Stützanordnung (25) eines Antriebsstranges (22) und die Bewegung des dem Antriebsstrang (22) zugehörigen Kreiselrechens (6, 7) während seiner Positionsverlagerung im Abstand relativ zum Tragrahmen (3) der Heuwerbungsmaschine (1) synchron erfolgen.

26. Heuwerbungsmaschine (1) nach einem oder mehreren der vorhergehenden Ansprüche, **dadurch gekennzeichnet, dass** die Bewegung der Stützanordnung (25) eines Antriebsstranges (22) und die Bewegung des dem Antriebsstrang (22) zugehörigen Kreiselrechens (6, 7) während seiner Positionsverlagerung im Abstand relativ zum Tragrahmen (3) der Heuwerbungsmaschine (1) proportional zueinander ablaufen.

27. Heuwerbungsmaschine (1) nach einem oder mehreren der vorhergehenden Ansprüche, **dadurch gekennzeichnet, dass** die Heuwerbungsmaschine (1) mindestens vier Kreiselrechen (6, 7, 8, 9) umfasst.

28. Heuwerbungsmaschine (1) nach einem oder mehreren der vorhergehenden Ansprüche, **dadurch gekennzeichnet, dass** mindestens zwei Kreiselrechen einer Traganordnung zugeordnet sind und diese mindestens zwei Kreiselrechen einer Traganordnung in der Arbeits- und Betriebsstellung nebeneinander, zumindest annähernd quer zur Arbeitsrichtung (F) angeordnet sind.

29. Heuwerbungsmaschine (1) nach einem oder mehreren der Ansprüche 1 bis 27, **dadurch gekennzeichnet, dass** die Heuwerbungsmaschine (1) mindestens vier Kreiselrechen (6, 7, 8, 9) umfasst, die in der Arbeits- und Betriebsstellung eine V-förmige Anordnung aufweisen.

30. Heuwerbungsmaschine (1) nach einem oder mehreren der vorhergehenden Ansprüche, **dadurch gekennzeichnet, dass** die Heuwerbungsmaschine (1) selbstfahrend ausgebildet ist.

## Claims

1. Haymaking machine (1), particularly for windrowing stalked and leafed agricultural crops, having at least two rotary rakes (6, 7, 8, 9) or similar rake elements which are driven in rotation about vertical axes, which are supported on the ground by means of supporting wheels (10), which have tined arms (12) fitted with tines (11), and of which at least those rotary rakes (6, 7) which determine the maximum working width can be transferred, by means of carrying arrangements (14) of variable length which are pivotably mounted on a load-bearing frame (3), from an end position which constitutes a working and operating position to a further end position, and back, and can be moved to vary their distance from the load-bearing frame (3), the drive arrangements (18) of those rotary rakes (6, 7) which determine the maximum working width and which can be moved to vary their distance from the load-bearing frame (3) each comprising a multi-piece drive train (22), of which the sub-drive-trains (23, 24) are connected, in such a way that their angle relative to one another can be varied, by at least one supporting arrangement (25) which transmits rotary movement, **characterised in that**, when the rotary rake (6, 7) is displaced from one end position to a second end position and vice versa, the supporting arrangement (25) of the drive train (22) varies its position both relative to the load-bearing frame (3) and also relative to the carrying arrangement (14) and the rotary rake (6, 7).

2. Haymaking machine (1) according to claim 1, **characterised in that** the supporting arrangement (25) of the drive train (22) comprises at least one joint which transmits rotary movement.

3. Haymaking machine (1) according to claim 1 or 2, **characterised in that** the supporting arrangement (25) of the drive train (22) comprises a gearbox (27).

4. Haymaking machine (1) according to one or more of the foregoing claims, **characterised in that** the supporting arrangement (25) of the drive train (22) has mounting and guiding members (26).

5. Haymaking machine (1) according to claim 4, **characterised in that** the mounting and guiding members (26) of the supporting arrangement (25) make it possible for there to be a simultaneous displacement of the position of the supporting arrangement (25) both relative to the load-bearing frame (3) and also relative to the carrying arrangement (14) and the rotary rake (6, 7).

6. Haymaking machine (1) according to one or more of the foregoing claims, **characterised in that** the supporting arrangement (25) has mounting and guiding members (26) which connect the supporting arrangement (25) to a carrying arrangement (14) in such a way that its position can be varied.

7. Haymaking machine (1) according to claim 6, **characterised in that** the supporting arrangement (25) has mounting and guiding members (26) which connect the supporting arrangement (25) to the carrying arm (28) of a carrying arrangement (14) in such a way that its position can be varied.

8. Haymaking machine (1) according to claim 7, **characterised in that** the supporting arrangement (25) has mounting and guiding members (26) which connect the supporting arrangement (25) to the carrying arm (28) of a carrying arrangement (14), in such a way that its position can be varied, in the end region of the carrying arm (28), which end region is mounted on the load-bearing frame (3).

9. Haymaking machine (1) according to one or more of claims 1 to 5, **characterised in that** the supporting arrangement (25) has mounting and guiding members (26) which connect the supporting arrangement (25) to the load-bearing frame (3) of the haymaking machine (1) in such a way that its position can be varied.

10. Haymaking machine (1) according to one or more of the foregoing claims, **characterised in that**, when the rotary rake (6, 7) is in its end position, the position of the supporting arrangement (25) is clearly determined both relative to the load-bearing frame (3) and also relative to the carrying arrangement (14) and the rotary rake (6, 7).

11. Haymaking machine (1) according to one or more of the foregoing claims, **characterised in that** the supporting arrangement (25) is moved along a linear path while its position is being varied.

12. Haymaking machine (1) according to one or more of claims 1 to 10, **characterised in that** the supporting arrangement (25) completes the variations in its position along a non-linear path.

13. Haymaking machine (1) according to one or more of the foregoing claims, **characterised in that** the multi-piece drive train (22) of a rotary rake (6, 7) which determines the maximum working width (A) and which can be moved to vary its distance from the load-bearing frame has at least two sub-drive-trains (23, 24) of variable length, and at least one supporting arrangement (25) which connects the said sub-drive-trains (23, 24) in such a way that their angle relative to one another can be varied.

14. Haymaking machine (1) according to one or more of the foregoing claims, **characterised in that** at least the carrying arrangements (14) of those rotary rakes (6, 7) which determine the maximum working width have a carrying arm in the form of an angled lever (28).

15. Hayinaking machine (1) according to claim 14, **characterised in that** the carrying arm (28) of the carrying arrangement (14) has a long side (29) of the angle whose length can be varied.

16. Haymaking machine (1) according to one or more of the foregoing claims, **characterised in that** at least the carrying arrangements (14) of those rotary rakes (6, 7) which determine the maximum working width (6, 7) each have a carrying arm which can be extended and retracted telescopically.

17. Haymaking machine (1) according to one or more of claims 1 to 15, **characterised in that** at least the carrying arrangements (14) of those rotary rakes (6, 7) which determine the maximum working width (6, 7) each have a multi-piece carrying arm whose length can be varied by means of pivot shafts.

18. Haymaking machine (1) according to one or more of the foregoing claims, **characterised in that** the movement of the supporting arrangement (25) of a drive train (22) is produced as a function of a variation in the position of the rotary rake (6, 7) associated with the drive train (22), which variation varies the distance of the supporting arrangement (25) from the load-bearing frame (3) of the haymaking machine (1).

19. Haymaking machine (1) according to claim 18, **characterised in that** the movement of the supporting arrangement (25) of a drive train (22) is produced, at least in one direction of movement, by a mechanical connection to the rotary rake (6, 7) associated with the drive train (22).

20. Haymaking machine (1) according to claim 19, **characterised in that** the supporting arrangement (25) of the drive train (22) of a rotary rake (6, 7) is connected to the rotary rake (6, 7) associated with the drive train (22) by a connecting member of variable length.

21. Haymaking machine (1) according to claim 19, **characterised in that** the supporting arrangement (25) of the drive train (22) of a rotary rake (6, 7) is connected to the rotary rake (6, 7) associated with the drive train (22) by a connecting member which transmits only tractive forces.

22. Haymaking machine (1) according to claim 18, **characterised in that** the movement of the supporting arrangement (25) of a drive train (22) is initiated by a signal which is triggered by the variation in the position of the rotary rake (6, 7) associated with the drive train (22), which variation varies the distance of the supporting arrangement (25) from the load-bearing frame (3) of the haymaking machine (1).

23. Haymaking machine (1) according to one or more of the foregoing claims, **characterised in that** the movement of the supporting arrangement (25) is produced by an electric or hydraulic positioner.

24. Haymaking machine (1) according to one or more of the foregoing claims, **characterised in that** at least part of the movement of the supporting arrangement (25) of a drive train (22) is produced by a force-storing means.

25. Haymaking machine (1) according to one or more of the foregoing claims, **characterised in that** the movement of the supporting arrangement (25) of a drive train (22), and the movement of the rotary rake (6, 7) associated with the drive train (22) during its displacement of position which varies its distance from the load-bearing frame (3) of the haymaking machine (1), take place in synchronisation.

26. Haymaking machine (1) according to one or more of the foregoing claims, **characterised in that** the movement of the supporting arrangement (25) of a drive train (22), and the movement of the rotary rake (6, 7) associated with the drive train (22) during its displacement of position which varies its distance from the load-bearing frame (3) of the haymaking machine, take place in proportion to one another.

27. Haymaking machine (1) according to one or more of the foregoing claims, **characterised in that** the haymaking machine (1) comprises at least four rotary rakes (6, 7, 8, 9).

28. Haymaking machine (1) according to one or more of the foregoing claims, **characterised in that** at least two rotary rakes are associated with a carrying arrangement and these at least two rotary rakes of a carrying arrangement are, in the working and operating position, arranged next to one another and at least approximately transversely to the working direction.

29. Haymaking machine (1) according to one or more of claims 1 to 27, **characterised in that** the haymaking machine (1) comprises at least four rotary rakes (6, 7, 8, 9) which are in a V-shaped arrangement in the working and operating position.

30. Haymaking machine (1) according to one or more of the foregoing claims, **characterised in that** the haymaking machine (1) is designed to be self-propelled.

## Revendications

1. Machine de fenaison notamment pour andainer des produits agricoles à tiges et feuilles, comportant au moins deux rotors racleurs (6, 7, 8, 9) ou éléments de raclage analogues, entraînés en rotation autour d'axes verticaux, s'appuyant sur le sol par des roues d'appui (10), ces rotors ayant des bras (12) garnis de dents (11), et parmi ces rotors au moins ceux (6, 7) définissant la largeur de travail maximale pouvant être conduits par l'intermédiaire de dispositif de support (14) de longueur variable, reliés de manière basculante à un châssis de support (3), d'une position de fin de course correspondant à la position de travail et de fonctionnement, dans une autre position de fin de course et inversement, en étant déplacés avec une distance variable par rapport au châssis de support (3),
les dispositifs d'entraînement (18) des rotors racleurs (6, 7) qui définissent la largeur de travail maximale et dont la distance par rapport au châssis de support (3) est variable, comportent une ligne de transmission (22) respective en plusieurs parties dont les parties (23, 24) sont reliées suivant un angle variable par un dispositif d'appui (25) transmettant au moins un mouvement de rotation,
**caractérisée en ce que**
le dispositif d'appui (25) de la ligne de transmission (22) change sa position par rapport au châssis de support (3) et aussi par rapport au dispositif de support (14) et aux rotors râteleurs (6, 7), lors du déplacement du rotor râteleur (6, 7), passant d'une première position de fin de course à une seconde position de fin course et inversement.

2. Machine de fenaison (1) selon la revendication 1,
**caractérisée en ce que**
le dispositif d'appui (25) de la ligne de transmission (22) comporte une articulation transmettant au moins un mouvement de rotation.

3. Machine de fenaison (1) selon la revendication 1 ou 2,
**caractérisée en ce que**
le dispositif d'appui (25) de la ligne de transmission (22) comprend une boite de transmission (27) .

4. Machine de fenaison (1) selon l'une ou plusieurs des revendications précédentes,
**caractérisée en ce que**
le dispositif d'appui (25) de la ligne de transmission (22) comporte des éléments de maintien et de guidage (26).

5. Machine de fenaison (1) selon la revendication 4,
**caractérisée en ce que**
les éléments de maintien et de guidage (26) du dispositif d'appui (25) permettent un déplacement de position simultané du dispositif d'appui (25) à la fois par rapport au châssis de support (3) et par rapport au dispositif de support (14) ainsi que par rapport aux rotors râteleurs (6, 7).

6. Machine de fenaison (1) selon l'une une plusieurs des revendications précédentes,
**caractérisée en ce que**
le dispositif d'appui (25) comporte des éléments de maintien et de guidage (26) reliant le dispositif d'appui (25) à un dispositif de support (14) selon une liaison de position variable.

7. Machine de fenaison (1) selon la revendication 6,
**caractérisée en ce que**
le dispositif d'appui (25) comporte des éléments de maintien et de guidage (26) reliant le dispositif d'appui (25) au bras de support (28) d'un dispositif de support (14) avec une position variable.

8. Machine de fenaison (1) selon la revendication 7,
**caractérisée en ce que**
le dispositif d'appui (25) comporte des éléments de maintien et de guidage (26) reliant dans des positions variable le dispositif d'appui (25) au bras de support (28) d'un dispositif de support (14) dans la zone d'extrémité du bras de support (28) tenu au châssis de support (3).

9. Machine de fenaison (1) selon une ou plusieurs de revendications 1 à 5,
**caractérisée en ce que**
le dispositif d'appui (25) comporte des éléments de maintien et de guidage (26) reliant le dispositif d'appui (25) au châssis de support (3) de la machine de fenaison (1) dans des positions variables.

10. Machine de fenaison (1) selon une ou plusieurs des revendications précédentes,
**caractérisées en ce que**
la disposition du dispositif d'appui (25) à la fois par rapport au châssis de support (3) et par rapport au dispositif de support (14) ainsi que par rapport aux rotors râteleurs (6, 7) est définie de manière univoque lorsque le rotor râteleur (6, 7) occupe l'une de ses positions de fin de course.

11. Machine de fenaison (1) selon une ou plusieurs revendications précédentes,
**caractérisée en ce que**
le dispositif d'appui (25) se déplace sur une trajectoire linéaire pendant son changement de position.

12. Machine de fenaison (1) selon une ou plusieurs revendications précédentes,
**caractérisée en ce que**
le dispositif d'appui (25) effectue ces changements de position suivant une trajectoire non linéaire.

13. Machine de fenaison (1) selon une ou plusieurs revendications précédentes,
**caractérisée en ce que**
la ligne de transmission (22) en plusieurs parties d'un rotor râteleur (6, 7) définissant la largeur de travail maximale A et mobile en distance par rapport au châssis de support, comporte au moins deux parties de ligne de transmission (23, 24) de longueur variable et au moins un dispositif d'appui (25) reliant les deux parties (23, 24) de la ligne de transmission suivant un angle variable.

14. Machine de fenaison (1) selon une ou plusieurs revendications précédentes,
caractériser en ce qu'
au moins les dispositifs de support (14) des rotors râteleurs (6, 7) définissant la largeur maximale de travail ont un bras de support en forme de levier coudé (28).

15. Machine de fenaison (1) selon la revendication 14,
**caractérisée en ce que**
le bras de support (28) du dispositif de support (14) a une branche 29 de longueur variable.

16. Machine de fenaison (1) selon une ou plusieurs revendications précédentes,
**caractérisé en ce qu'**
au moins chacun des dispositifs de support (14) des rotors râteleurs (6, 7) définissant la largeur maximale de travail comporte un bras de support télescopique effectuant un mouvement rentrant et un mouvement sortant.

17. Machine de fenaison (1) selon une ou plusieurs revendications 1 à 15,
**caractérisée en ce qu'**
au moins les dispositifs de support (14) des rotors râteleurs (6, 7) définissant la largeur maximale de travail, ont un bras de support en plusieurs parties, de longueur variable en fonction des axes de basculement.

18. Machine de fenaison (1) selon une ou plusieurs revendications précédentes,
caractérisant en ce que
le mouvement du dispositif d'appui (25) d'une ligne de transmission (22) est produit en fonction d'une variation de position du rotor râteleur (6, 7) appartenant à ligne de transmission (22), en distance, par rapport au châssis de support (3) de la machine de fenaison.

19. Machine de fenaison (1) selon la revendication 18,
**caractérisée en ce que**
le mouvement du dispositif d'appui (25) d'une ligne de transmission (22) dans au moins une direction de mouvement est produit par une liaison mécanique avec le rotor râteleur (6, 7) associé à la ligne de transmission (22).

20. Machine de fenaison (1) selon la revendication 19,
**caractérisée en ce que**
le dispositif d'appui (25) de la ligne d'entraînement (22) d'un rotor râteleur (6, 7) est relié par un élément de liaison de longueur variable au rotor râteleur (6, 7) à cette ligne de transmission (22).

21. Machine de fenaison (1) selon la revendication 19,
**caractérisée en ce que**
le dispositif d'appui (25) de la ligne de transmission (22) d'un rotor râteleur (6, 7) est relié par un élément de liaison qui ne transmet que des efforts de traction au rotor râteleur (6, 7) correspondant à cette ligne de transmission (22).

22. Machine de fenaison (1) selon la revendication 18,
**caractérisée en ce que**
le mouvement du dispositif d'appui (25) d'une ligne de transmission (22) est induit par un signal déclenché par le changement de position du rotor râteleur (6, 7) appartenant à la ligne de transmission (22), à distance par rapport au châssis de support (3) de la machine de fenaison (1).

23. Machine de fenaison (1) selon une ou plusieurs revendications précédentes,
**caractérisée en ce que**
le mouvement du dispositif d'appui (25) est assuré par un actionneur électrique ou hydraulique.

24. Machine de fenaison (1) selon une ou plusieurs revendications précédentes,
**caractérisée en ce que**
le mouvement du dispositif d'appui (25) d'une ligne de transmission (22) est assuré au moins en partie par un accumulateur de force.

25. Machine de fenaison (1) selon une ou plusieurs revendications précédentes,
**caractérisée en ce que**
le mouvement du dispositif d'appui (25) d'une ligne de transmission (22) et le mouvement du rotor râteleur (6, 7) correspondant à cette ligne de transmission (22) se font en synchronisme pendant un déplacement de position à distance par rapport au châssis de support (3) de la machine de fenaison (1).

26. Machine de fenaison (1) selon une ou plusieurs revendications précédentes,
**caractérisée en ce que**
le mouvement du dispositif d'appui (25) d'une ligne de transmission (22) et le mouvement du rotor râteleur (6, 7) correspondant à cette ligne de transmission (22) sont des mouvements qui se déroulent proportionnellement pendant un déplacement de position à distance par rapport à l'élément de support (3) de la machine de fenaison (1).

27. Machine de fenaison (1) selon une ou plusieurs revendications précédentes,
**caractérisée en ce que**
la machine de fenaison (1) comporte au moins quatre rotors râteleurs (6, 7, 8, 9).

28. Machine de fenaison (1) selon une ou plusieurs revendications précédentes,
**caractérisée en ce qu'**
au moins deux rotors râteleurs sont associés à un dispositif de support et au moins ces deux rotors râteleurs d'un dispositif de support sont associés au moins sensiblement transversalement à la direction de travail F lorsqu'ils sont en position de travail et de fonctionnement.

29. Machine de fenaison (1) selon une ou plusieurs revendications 1 à 27,
**caractérisée en ce que**
la machine de fenaison (1) comporte au moins quatre rotors râteleurs (6, 7, 8, 9) qui ont une disposition en forme de V en position de travail et de fonctionnement.

30. Machine de fenaison (1) selon une ou plusieurs revendications précédentes,
**caractérisée en ce qu'**
elle est automotrice.
